(19) Europäisches Patentamt
European Patent Office
Office européen des brevets

(11) **EP 4 764 427 A1**

(12) **EUROPEAN PATENT APPLICATION**

(43) Date of publication:
24.06.2026 Bulletin 2026/26

(21) Application number: 24221164.7

(22) Date of filing: 18.12.2024

(51) International Patent Classification (IPC):
*G01F 23/284* (2006.01)     *G01S 13/34* (2006.01)
*G01S 13/88* (2006.01)

(52) Cooperative Patent Classification (CPC):
**G01F 23/284; G01S 7/352; G01S 13/34;**
**G01S 13/88**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Rosemount Tank Radar AB**
**435 23 Mölnlycke (SE)**

(72) Inventors:
• **KHANAL, Prabhat**
**583 28 LINKÖPING (SE)**
• **JIRSKOG, Anders**
**561 48 HUSKVARNA (SE)**
• **GEORGE, Emil**
**584 31 LINKÖPING (SE)**

(74) Representative: **Kransell & Wennborg KB**
**P.O. Box 2096**
**403 12 Göteborg (SE)**

(54) **RADAR LEVEL GAUGE SYSTEM WITH PHASE-CORRELATED SIGNAL GENERATION**

(57)     A radar level gauge system (3) comprising a transmission line probe (13); a transceiver (19) coupled to the transmission line probe (13), the transceiver (19) comprising: a first signal generator (31) connected to the transmission line probe (13) and controllable to generate a transmit signal ($S_T$) to include a measurement sweep across frequencies defined by a first frequency ($f_1$) and a second frequency ($f_2$); a second signal generator (33) configured to generate an offset signal (So) having a constant frequency (fo) lower than the first frequency ($f_1$); a first mixer (35) for mixing the transmit signal ($S_T$) and the offset signal ($S_O$) to form a first mixer output signal ($S_{REF}$); and a second mixer (37) for mixing the first mixer output signal ($S_{REF}$) and the reflection signal ($S_R$) to form a second mixer output signal ($S_{IF}$); and processing circuitry (21) coupled to the transceiver (19) and configured to determine the filling level (L) based on the second mixer output signal ($S_{IF}$).

Fig. 2

EP 4 764 427 A1

**Description**

Technical Field of the Invention

The present invention relates to a radar level gauge system and method, for determining a filling level of a product in a tank.

Technical Background

In filling level determining systems functioning by transmitting and towards and into a product in a tank, pulsed electromagnetic signals are usually used. Although having the capability of providing excellent measurement accuracy, such so-called pulsed guided wave radar (GWR) systems have drawbacks.

For instance, it has proven to be relatively challenging to handle issues related to timing and temperature dependence, especially while striving for low cost and complexity.

For non-contact radar level gauge systems, pulsed signals are generally not used. Instead, various implementations of FMCW-techniques are typically used. Recently, the trend has been towards stepped measurement sweeps and higher frequencies. The reasons for increasing the frequency of the measurement signals include that the dimensions of the non-contact radar level gauge system can be reduced and that the measurement accuracy can be improved.

There have also been efforts to implement FMCW-type techniques on guided wave radar systems. For instance, US 2016/0103006 discloses an FMCW-type radar level gauge configured to transmit an electromagnetic transmit signal and receive an electromagnetic return signal reflected from the surface, the electromagnetic transmit signal having a bandwidth of at least 1 GHz, a relative bandwidth (max frequency/min frequency) of less than 2.5 and an upper frequency limit less than 4 GHz. The gauge according to US 2016/0103006 comprises a single conductor probe mechanically suspended in the tank and extending into the product in the tank, and a matching arrangement providing an electrically matched connection between an electrical feed-through and the single conductor probe.

US 2023/0063153 relates to another implementation of FMCW-type techniques on guided wave radar systems, using a larger relative bandwidth, providing for improvements in relation to the radar level gauge system in US 2016/0103006.

It would be desirable to provide for a further improved radar level gauge system, in particular providing for further improved measurement performance.

Summary of the Invention

In view of the above, a general object of the present invention is to provide an improved radar level gauge system using a transmission line probe for guiding electromagnetic signals, in particular providing for improved measurement performance.

According to a first aspect of the present invention, it is therefore provided a radar level gauge system, for determining a filling level of a product in a tank, the radar level gauge system comprising: a transmission line probe configured to guide an electromagnetic transmit signal towards and into the product in the tank, and to guide an electromagnetic reflection signal resulting from reflection of the transmit signal at a surface of the product; a transceiver coupled to the transmission line probe, the transceiver comprising: a first signal generator connected to the transmission line probe and controllable to generate the transmit signal to include a measurement sweep across frequencies being within a measurement frequency range defined by a first frequency and a second frequency, higher than the first frequency; a second signal generator configured to generate an offset signal having a constant frequency lower than the first frequency; a first mixer having a first input connected to the first signal generator for receiving the transmit signal, a second input connected to the second signal generator for receiving the offset signal, and an output for providing a first mixer output signal; and a second mixer having a first input connected to the output of the first mixer for receiving the first mixer output signal, a second input connected to the transmission line probe for receiving the reflection signal, and an output for providing a second mixer output signal; and processing circuitry coupled to the transceiver and configured to determine the filling level based on the second mixer output signal.

The present invention is based on the realization that phase correlation between the transmit signal and a reference signal, with which the transmit signal is mixed to get a so-called intermediate frequency signal, would provide for a significant increase in the dynamic range of the radar level gauge system, compared to the case without phase correlation. The present inventors have further realized that such phase correlation, in combination with a desired frequency difference between the transmit signal and the reference signal can be achieved by generating the reference signal by mixing the transmit signal with an offset signal having a constant frequency, corresponding to the desired frequency difference between the transmit signal and the reference signal. Thereby, the transmit signal and the reference signal can originate from the same signal generator, which provides for phase correlation between the transmit signal and the reference signal.

The measurement sweep may be across a time series of piece-wise constant frequencies within the measurement frequency range. With this selection of measurement sweep, the radar level gauge system can be said to be of the so-called stepped FMCW type. The use of a time series of piece-wise constant frequencies within the measurement frequency range, may facilitate signal processing and provide for improved performance of the radar level gauge system.

A difference between frequencies in each pair of adjacent frequencies in the frequency range may be equal to the first frequency, which is the lowest frequency in the measurement frequency range. The use of a transmit signal in which the difference between adjacent frequencies is equal to the lowest frequency of the frequency range of the transmit signal allows for signal processing providing information about polarities of echo signals resulting from reflection of the transmit signal at the impedance discontinuities encountered thereby. This may facilitate the identification of echo signals resulting from reflection of the transmit signal at certain impedance discontinuities, such as a reference impedance discontinuity at an interface between the transceiver and the transmission line probe and/or an impedance discontinuity at an end of the transmission line probe. This may, in turn, provide for more robust and reliable filling level determination. Furthermore, this transmit signal configuration may provide an unambiguous relation between the difference in phase between the reflection signal and the transmit signal, and the filling level. This provides for improved precision in the determination of the filling level, in relation to determining the filling level using frequency shift information.

The radar level gauge system may be configured to form a frequency domain measurement signal indicative of an amplitude and a phase of the second mixer output signal as a function of frequency; and transform the frequency domain measurement signal to a time domain measurement signal. In example configurations where an initial phase of the offset signal is constant during a measurement sweep, this processing may serve to remove the phase contribution by the initial phase of the offset signal from the second mixer output signal, whereby the performance of the radar level gauge system can be improved. For example, detection of the surface of the product can be facilitated.

According to examples, the radar level gauge system may be configured to form the frequency domain measurement signal by determining data sets of the amplitude and phase of the second mixer output signal for different frequencies and adding mirrored data sets for negative frequencies, each mirrored data set for a negative frequency value being a complex conjugate of a data set of the measured amplitude and phase of the second mixer output signal for the corresponding positive frequency value. This may provide for a frequency domain measurement signal that can be transformed to a time domain measurement signal including echo peaks with different polarities depending on properties impedance discontinuities reflecting the transmit signal. This may, in turn, facilitate identification of one or more reference echo peaks and/or elimination of undesirable echo peaks.

The radar level gauge system may be configured to transform the frequency domain measurement signal to the time domain measurement signal by performing inverse digital Fourier transformation on the frequency domain measurement signal.

The radar level gauge system may comprise a filter arranged and configured to filter the second mixer output signal. The filter may have an upper cutoff frequency being higher than the constant frequency of the offset signal and lower than two times the constant frequency of the offset signal. In a radar level gauge system with a transmission line probe, using a transmit signal including a measurement sweep, it may be beneficial to use a measurement sweep with a considerably larger relative bandwidth (the second frequency divided by the first frequency) than for a radar level gauge system with a radiating antenna (non-contacting radar - NCR). When generating the transmit signal in the form of a measurement sweep with a relatively large relative bandwidth, lower frequencies are generally generated by dividing higher frequencies, resulting in the transmit signal including several frequencies (the higher frequencies that are divided). To reduce the risk of the higher frequencies negatively influencing the measurement performance of the radar level gauge system, it may be advantageous to use a filter that can remove, or at least significantly reduce, the undesired higher frequency components that may be present in the second mixer output signal. The filter may be an analog filter or a digital filter. Further, it may be advantageous to first filter the second mixer output signal using an analog filter, and then filter a sampled version of the second mixer output signal again using a digital filter.

In example configurations of the radar level gauge system, the transmission line probe may be a single conductor probe configured to guide the transmit signal and the reflection signal as surface waves.

In other example configurations, the transmission line probe may be one of a coaxial probe and a parallel wire transmission line probe.

According to a second aspect of the present invention, it is provided a method of determining a filling level of a product in a tank using a radar level gauge system comprising a transceiver, a transmission line probe, and processing circuitry, the method comprising: generating, by a first signal generator comprised in the transceiver and connected to the transmission line probe, an electromagnetic transmit signal including a measurement sweep across frequencies being within a measurement frequency range defined by a first frequency and a second frequency, higher than the first frequency; guiding the transmit signal towards and into the product in the tank; guiding an electromagnetic reflection signal resulting from reflection of the transmit signal at impedance discontinuities encountered thereby, back towards the transceiver; generating, by a second signal generator comprised in the transceiver, an offset signal having a constant frequency lower than the first frequency; mixing the transmit signal with the offset signal to form a first mixer output signal exhibiting a constant frequency difference in relation to the transmit signal across the measurement sweep; mixing the reflection signal with the reference signal to form a second mixer output signal; and determining the filling level based on the second mixer output signal.

The second signal generator may generate the offset signal continuously during a duration of the measurement sweep. Hereby, it can be provided for that an initial phase of the offset signal is constant during the measurement sweep, which allows for removal of the phase contribution by the initial phase of the offset signal from the second mixer output signal. This may, in turn, provide for improved performance of the radar level gauge system. For example, detection of the surface of the product can be facilitated.

The measurement sweep may be across a time series of piece-wise constant frequencies within the measurement frequency range. With this selection of measurement sweep, the radar level gauge system can be said to be of the so-called stepped FMCW type. The use of a time series of piece-wise constant frequencies within the measurement frequency range, may facilitate signal processing and provide for improved performance of the radar level gauge system.

The first frequency of the measurement sweep may advantageously be in the range 0.3 MHz to 8 MHz.

The second frequency of the measurement sweep may advantageously be in the range 500 MHz to 4 GHz.

In summary, the present invention thus relates to a radar level gauge system comprising a transmission line probe; a transceiver coupled to the transmission line probe, the transceiver comprising: a first signal generator connected to the transmission line probe and controllable to generate a transmit signal to include a measurement sweep across frequencies defined by a first frequency and a second frequency; a second signal generator configured to generate an offset signal having a constant frequency lower than the first frequency; a first mixer for mixing the transmit signal and the offset signal to form a first mixer output signal; and a second mixer for mixing the first mixer output signal and the reflection signal to form a second mixer output signal; and processing circuitry coupled to the transceiver and configured to determine the filling level based on the second mixer output signal.

Brief Description of the Drawings

These and other aspects of the present invention will now be described in more detail, with reference to the appended drawings, wherein:

Fig 1A schematically illustrates an exemplary tank arrangement comprising a radar level gauge system according to an embodiment of the present invention;
Fig 1B is a schematic illustration of the radar level gauge system in fig 1A;
Fig 2 is a partial schematic block diagram of the radar level gauge system in figs 1A-B;
Fig 3 is a flow-chart schematically illustrating a method according to an embodiment of the present invention;
Fig 4 is a diagram schematically illustrating a measurement sweep that may be used in an example embodiment of the present invention;
Fig 5A is a diagram schematically illustrating a first exemplary measurement signal, in the frequency domain;
Fig 5B is a diagram schematically illustrating a second exemplary measurement signal, in the frequency domain; and
Fig 6 is a diagram schematically illustrating an exemplary measurement signal, in the time domain, formed based on the frequency domain measurement signal in fig 5B.

Detailed Description of Example Embodiments of the Invention

In the present detailed description, various embodiments of the radar level gauge system and method are mainly discussed with reference to a radar level gauge system comprising a transmission line probe in the form of single conductor probe, or so-called Goubau probe.

It should be noted that this by no means limits the scope of the present invention, which equally well includes radar level gauge systems and methods using other types of transmission line probes, such as a coaxial probe or a parallel wire transmission line probe.

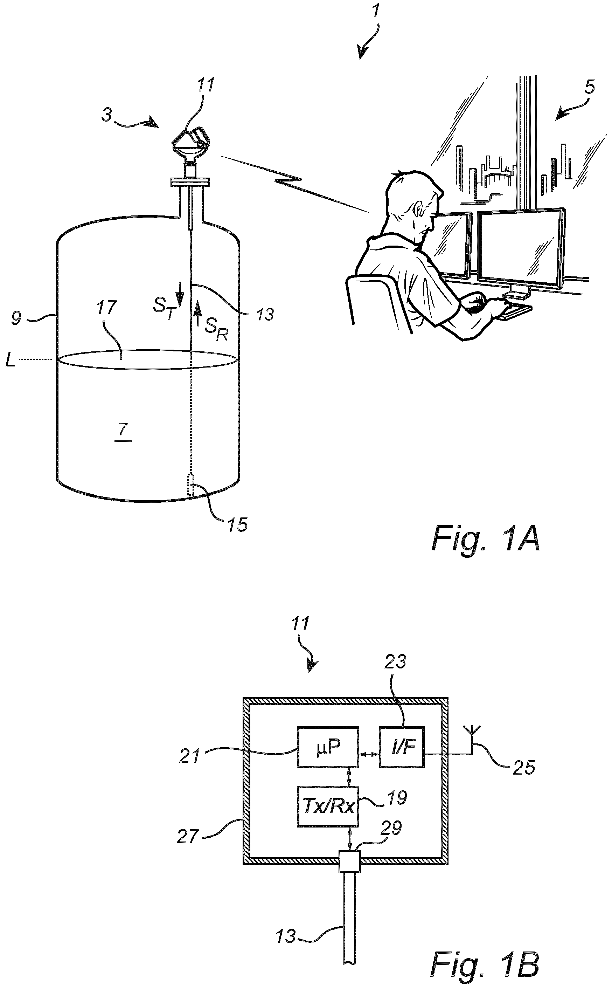

Fig 1A schematically shows a level measuring system 1 comprising a radar level gauge system 3 according to an example embodiment of the present invention, and a host system 5 illustrated as a control room.

The radar level gauge system 3 is installed to measure the filling level of a product 7 in a tank 9. The radar level gauge system 3 comprises a measuring electronics unit 11 arranged outside the tank 9, and a transmission line probe, here in the form of a single conductor probe 13, extending from the measuring electronics unit 11 towards and into the product 7. In the example embodiment in fig 1A, the single conductor probe 13 is a wire probe, that has a weight 15 attached at the end thereof to keep the wire straight and vertical.

By analyzing a timing relation between an electromagnetic transmit signal $S_T$ being guided by the transmission line probe 13 towards the surface 17 of the product 7, and an electromagnetic reflection signal $S_R$ being guided back from the surface 17 by the transmission line probe 13, the measurement electronics unit 11 can determine the distance between a reference position (such as a feed-through between the outside and the inside of the tank) and the surface 17 of the product 7, whereby the filling level L can be deduced. It should be noted that, although a tank 9 containing a single product 7 is discussed herein, the distance to another material interface along the transmission line probe 13 (if present) may be measured in a similar manner.

As is schematically illustrated in fig 1B, the measurement electronics unit 11 comprises a transceiver 19, processing circuitry 21, a communication interface 23, and a communication antenna 25 for wireless communication with the control room 5. The transceiver 19, the processing circuitry 21, and the communication interface 23 are all illustrated as being enclosed in a measurement electronics unit housing 27.

The transceiver 19 is configured to generate, transmit and receive electromagnetic signals, and is coupled to the transmission line probe 13 via a feed-through 29 through a wall of the tank 9. Various suitable feed-through configurations are, *per se,* known in the art, and the feed-through 29 is schematically indicated as a simple box in fig 1B.

The processing circuitry 21 is coupled to the transceiver 19 and is configured to determine the filling level L based on a timing relation between the reflection signal $S_R$ and the transmit signal $S_T$ as will be described in greater detail further below. The communication interface 23 is connected to the processing circuitry 21 and configured to allow communication with the host system 5 via the communication antenna 25. In the example embodiment of figs 1A-B, the communication between the radar level gauge system 3 and the host system 5 is indicated as being wireless communication. Alternatively, communication may, for example, take place over an analog and/or digital wire-based communication channel. For instance, the communication channel may be a two-wire 4-20 mA loop and the filling level may be communicated by providing a certain current corresponding to the filling level on the two-wire 4-20 mA loop. Digital data may also be sent across such a 4-20 mA loop, using the HART protocol.

Moreover, although not shown in fig 1B, the radar level gauge system 3 may be connectable to an external power source, or may be powered through communication lines.

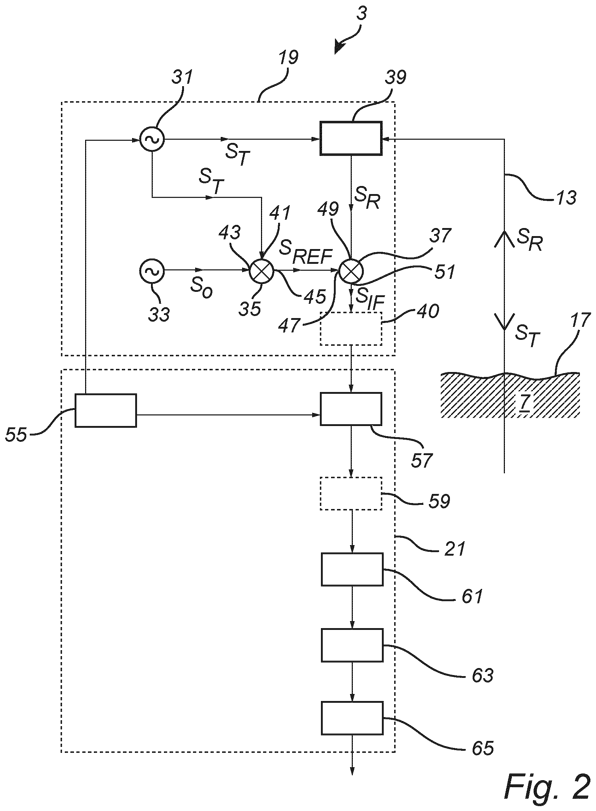

Fig 2 is a partial schematic block diagram of an example configuration of the radar level gauge system 3 in figs 1A-B.

The transceiver 19 is here shown as including a first signal generator 31, a second signal generator 33, a first mixer 35, a second mixer 37, a coupler 39, and an optional analog filter 40. The first mixer 35 has a first input 41, a second input 43, and an output 45. The second mixer 37 has a first input 47, a second input 49, and an output 51. As is indicated in fig 2, the first signal generator 31 is connected to the transmission line probe 13, via the coupler 39. The first signal generator 31 is also connected to the first input 41 of the first mixer 35. The second signal generator 33 is connected to the second input 43 of the first mixer 35. The output 45 of the first mixer 35 is connected to the first input 47 of the second mixer, and the transmission line probe 13 is connected to the second input 49 of the second mixer 37, via the coupler 39. In configurations of the transceiver 19 comprising the optional analog filter 40, the output 51 of the second mixer 37 may be connected to the optional analog filter 40.

The first signal generator 31 is controllable to generate the transmit signal $S_T$ to include a measurement sweep across frequencies being within a measurement frequency range defined by a first frequency $f_1$ and a second frequency $f_2$, higher than the first frequency $f_1$. The second signal generator 33 is configured to generate an offset signal So having a constant frequency $f_O$ lower than the first frequency $f_1$. It may be beneficial to configure the second signal generator 33 to generate the offset signal continuously during the measurement sweep, as a way to ensure that an initial phase of the offset signal So remains unchanged during the measurement sweep.

The exemplary processing circuitry 21 is indicated as including timing circuitry 55, a sampler 57, an optional digital filter 59, a measurement block 61, a transformation block 63, and a filling level determining block 65.

As is schematically indicated in fig 2, the timing circuitry 55 may be coupled to the first signal generator 31. The timing circuitry 55 may be configured to control the first signal generator 31 to generate the transmit signal $S_T$.

As is indicated in fig 2, the transmit signal $S_T$ is mixed, in the first mixer 35, with the offset signal So to thereby form a first mixer output signal $S_{REF}$ having a frequency that differs from the time-varying frequency of the transmit signal $S_T$ by the constant frequency $f_O$ of the offset signal So generated by the second signal generator 33. The first mixer output signal $S_{REF}$, which may also be referred to as a reference signal, is mixed, in the second mixer 37, with the reflection signal $S_R$ to form a second mixer output signal $S_{IF}$, which may be referred to as an intermediate frequency signal.

The portion of the second mixer output signal $S_{IF}$ that is of interest for additional processing will exhibit a frequency that is substantially equal to the frequency difference between the reflection signal $S_R$ and the first mixer output signal $S_{REF}$, which is the constant frequency $f_O$ of the offset signal So generated by the second signal generator 33.

To facilitate subsequent signal processing, the second mixer output signal $S_{IF}$ may therefore, as was mentioned further above, be passed through the optional analog filter 40.

As is schematically shown in fig 2, the second mixer output signal $S_{IF}$ may be sampled by the sampler 57, which may be controlled by the timing circuitry 55 to be synchronized with the operation of the first signal generator 31. The sampled second mixer output signal $S_{IF}$ may be passed through the optional digital filter 59.

The sampled values from the sampler 57 may be provided to the measurement block 61, where the amplitude and/or phase of the second mixer output signal $S_{IF}$ mixer output may be measured according to one of several methods *per se* well known to those of ordinary skill in the art. The measured values of the amplitude and/or phase as a function of frequency of the transmit signal $S_T$ may then be further processed by the transformation block 63 and the level determining block 65 to determine the filling level L in the tank 9, and provide a signal indicative thereof.

It should be noted that elements of the transceiver 19 may be implemented in hardware, and may form part of an integrated unit normally referred to as a microwave unit, and that at least some portions of the processing circuitry 21 may be embodied by software modules executed by an embedded processor. The invention is not restricted to this particular realization, and any implementation found suitable to realize the herein described functionality may be contemplated.

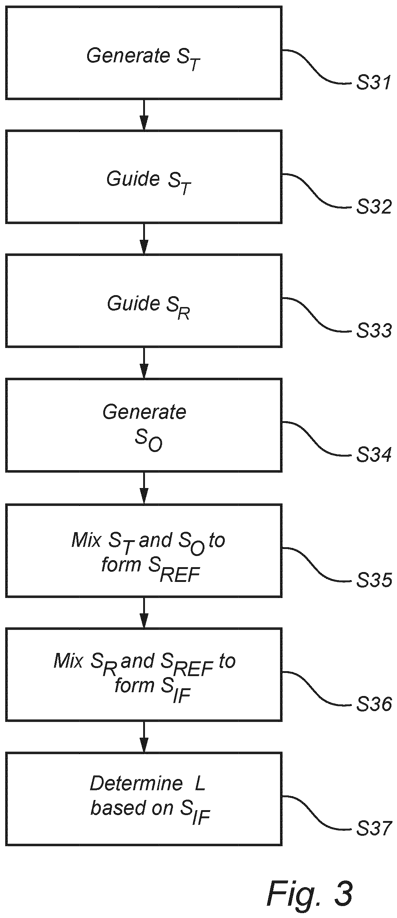

Exemplary operation of the radar level gauge system 3 described so far will be described in greater detail further below with reference to the flow-chart in fig 3 and other illustrations as indicated.

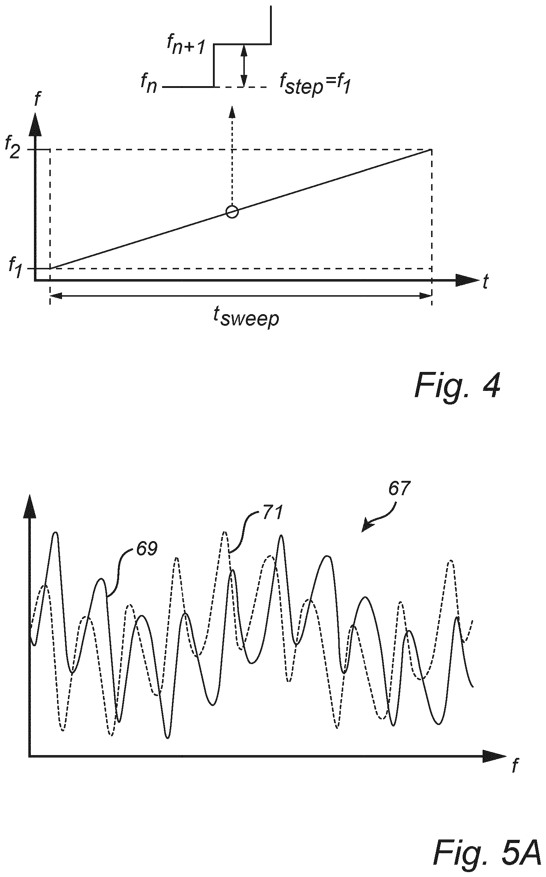

In a first step S31, an electromagnetic transmit signal $S_T$ is generated by the first signal generator 31 in fig 2. With further reference to fig 4, the transmit signal $S_T$ exhibits a measurement sweep that is transmitted during a sweep time $t_{sweep}$. As can be seen in the enlarged portion of fig 4, the measurement sweep may be across a time series of piece-wise constant frequencies $f_n$. The frequencies in this time series of piece-wise constant frequencies $f_n$ are within a measurement frequency range starting at a first frequency $f_1$ and ending at a second frequency $f_2$, which is higher than the first frequency $f_1$. A difference $f_{step}$ between frequencies in each pair of adjacent frequencies $f_n$, $f_{n+1}$ in the frequency range may be equal in magnitude to the first frequency $f_1$. Accordingly, if the first frequency $f_1$ is, say, 1 MHz, then the difference $f_{step}$ may be 1 MHz. Referring back to fig 2, the timing circuitry 55 may control the first signal generator 31 to generate the above-described measurement sweep.

Although a single measurement sweep is shown in fig 4, it should be understood that the transmit signal $S_T$ may typically include a sequence of measurement sweeps. Furthermore, the frequency need not be monotonically increasing as is shown in fig 4. In embodiments, a measurement sweep may start at the second frequency $f_2$ and end at the first frequency $f_1$. According to other embodiments, the frequencies may be output in arbitrary order. In such embodiments, it may be desirable to sort sampled values in order of increasing frequency of the transmit signal, from the first frequency $f_1$ to the second frequency $f_2$ before certain digital processing.

In the subsequent step S32, the transmit signal $S_T$ is guided by the transmission line probe 13 towards and into the product 7 in the tank 9.

An electromagnetic reflection signal $S_R$ resulting from reflection of the transmit signal $S_T$ at impedance discontinuities encountered thereby is guided S33 by the transmission line probe 13 back towards the transceiver 19.

An offset signal So is generated S34, by the second signal generator 33 in fig 2, having a constant frequency $f_O$ lower than the first frequency $f_1$. The offset signal may advantageously be generated continuously during the measurement sweep, as a way to ensure that an initial phase of the offset signal So remains unchanged during the measurement sweep.

With continued reference to fig 2 and the flow-chart in fig 3, the transmit signal $S_T$ and the offset signal So are mixed S35 by the first mixer 35 to form the first mixer output signal $S_{REF}$.

An simplified example result of this mixing is provided below, where, for all signals, the maximum amplitude of the signal is taken to be 1, to illustrate the result of the mixing on the frequency and phase.

The transmit signal $S_T$ is thus represented by the following signal:

$$S_T = \cos\left(2\pi f_T t + \varphi_{f_T}\right),$$

where ft is the (time-varying) frequency of the transmit signal and $\varphi_{f_T}$ is the initial phase of the transmit signal $S_T$. The offset signal So is represented by:

$$S_O = \cos\left(2\pi f_O t + \varphi_{f_O}\right),$$

where $f_O$ is the constant offset frequency of the offset signal and $\varphi_{f_0}$ is the initial phase of the offset signal So.

The first mixer output signal $S_{REF}$ becomes:

$$S_{REF} = S_T S_O = \cos\left(2\pi f_T t + \varphi_{f_T}\right)\cos\left(2\pi f_O t + \varphi_{f_O}\right).$$

With continued reference to fig 2 and the flow-chart in fig 3, the reflection signal $S_R$ and the first mixer output signal $S_{REF}$ are mixed S36 by the second mixer 37 to form the second mixer output signal $S_{IF}$. The reflection signal $S_R$ is represented by:

$$S_R = S_T \cos\left(\frac{2\pi}{\lambda} 2R\right),$$

where $\lambda$ is the (time-varying) wavelength of the transmit signal ST, and R is the distance to the surface 17 of the product 7. The second mixer output signal $S_{IF}$ is given by:

$$S_{IF} = S_R S_{REF} = \frac{1}{2}\cos\left(\frac{2\pi}{\lambda} 2R\right)\cos\left(2\pi f_O t + \varphi_{f_O}\right).$$

As was described above with reference to fig 2, unwanted frequencies can be removed using the optional analog filter 40 and/or the optional digital filter 59.

Finally, the level L of the product 7 in the tank can be determined S37 based on the second mixer output signal $S_{IF}$.

The second mixer output signal $S_{IF}$ can be seen as a complex signal with a real component representing the amplitude of the mixer output and an imaginary component representing the phase of the mixer output.

Based on the second mixer output signal $S_{IF}$, the phase of the second mixer output signal $S_{IF}$ can be related to the phase of the offset signal $S_O$, so that the amplitude and the phase of the second mixer output signal $S_{IF}$ can be measured by the measurement block 61 in fig 2. The filling level L may be determined, by the level determining block 65, based on the sampled measurement signal.

The determination S37 of the level of the product may involve forming a measurement signal based on the second mixer output signal $S_{IF}$ by sampling the second mixer output signal $S_{IF}$, by the sampler 57 at sampling times that are coordinated with the frequency steps of the transmit signal $S_T$. At least one sample of the second mixer output signal $S_{IF}$ may be taken for each piece-wise constant frequency in the measurement sweep. To achieve this, the sampler 57 may be controlled by the timing circuitry 55 as indicated in fig 2.

After the sampling, a frequency domain measurement signal may be formed, indicative of the amplitude and the phase of the second mixer output signal $S_{IF}$ as a function of the frequency of the transmit signal $S_T$. An example of such a frequency domain measurement signal 67 is shown in fig 5A, where the solid line 69 represents samples of the real component of the second mixer output signal $S_{IF}$, and the dashed line 71 represents samples of the imaginary component of the second mixer output signal $S_{IF}$.

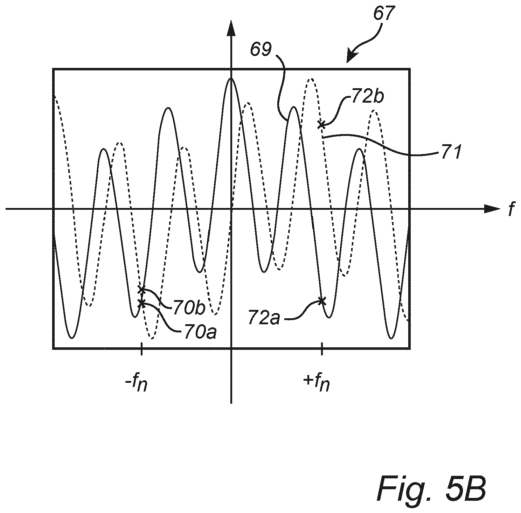

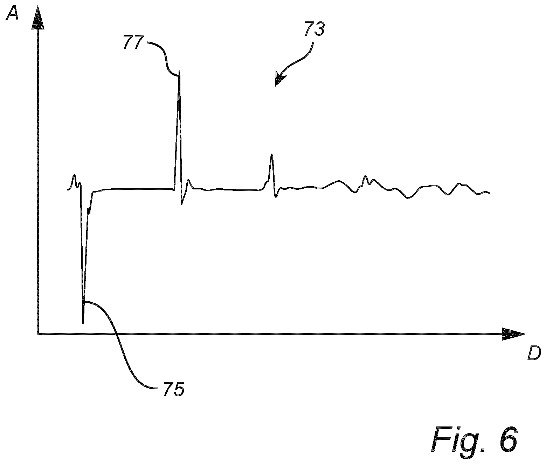

With reference to fig 5B, the frequency domain measurement signal 67 may alternatively be formed by additionally adding mirrored data sets for negative frequencies. Referring to fig 5B, each mirrored data set 70a-b for a negative frequency value $-f_n$ is a complex conjugate of a data set 72a-b of the measured amplitude and phase of the mixer output for the corresponding positive frequency value $+f_n$. When the frequency domain measurement signal 67 in fig 5B is transformed, by the transformation block 63, to a time domain measurement signal, echo peaks with different polarities depending on the properties of the different encountered impedance discontinuities can be obtained. An example of such a time domain measurement signal 73 is shown in fig 6.

In the process of transforming the second mixer output signal $S_{IF}$ to the frequency domain, and then back to the time domain, the initial phase $\varphi_{f_0}$ of the offset signal So disappears, as long as the initial phase $\varphi_{f_0}$ of the offset signal So is constant during the measurement sweep.

Based on the time domain measurement signal 73, it is straightforward to translate the time to distance from the transceiver 19 (typically from some reference structure, such as the tank feed-through 29) to the surface 17 of the product 7 (the "ullage"), which can easily be converted to the filling level L. In the exemplary time domain measurement signal 73 (converted to distance) in fig 6, the reflection from the tank feed-through is a negative peak 75, and the reflection from the surface 17 is the first strong positive peak 77.

The transformation to the time domain may advantageously include performing inverse digital Fourier transformation on the frequency domain measurement signal 67. The above-mentioned addition of the mirrored data sets is made possible by the specific property of the frequency step $f_{step}$ being equal to the first frequency $f_1$ of the measurement sweep (see fig 4). This, in turn allows for determination of the polarities of the reflection peaks, which facilitates identification of the so-called fiducial pulse (the negative peak 75) and the surface reflection (which may for example be the first positive peak 77 that is higher than a predefined threshold). For example, inverse fast fourier transformation (IFFT) may be used.

Through a suitable choice of the first frequency $f_1$, the phase of the measurement signal will be unambiguous across the desired measurement range. The desired measurement range will depend on the application. For a longer measurement range, the first frequency may be selected to be relatively low. For instance, a first frequency $f_1$ of 1 MHz will correspond to a maximum range of about 300 m, which should be more than enough for most applications. For most tank gauging application, the first frequency $f_1$ may advantageously be in the range 0.3 MHz to 8 MHz.

Regarding the choice of value for the second frequency $f_2$, this will typically be a trade-off between measurement time/energy consumption and accuracy. For most tank gauging application, the second frequency $f_2$ of the measurement sweep may be in the range 500 MHz to 4 GHz.

In certain applications, it may be desired to measure very short distances very quickly. Then the first frequency $f_1$ may be selected higher, such as 10 MHz, and the second frequency $f_2$ may also be selected higher, such as 10 GHz.

The person skilled in the art realizes that the present invention by no means is limited to the preferred embodiments described above. On the contrary, many modifications and variations are possible within the scope of the appended claims.

**Claims**

1. A radar level gauge system (3), for determining a filling level (L) of a product (7) in a tank (9), the radar level gauge system (3) comprising:

    a transmission line probe (13) configured to guide an electromagnetic transmit signal ($S_T$) towards and into the product (7) in the tank (9), and to guide an electromagnetic reflection signal ($S_R$) resulting from reflection of the transmit signal ($S_T$) at a surface (17) of the product (7);
    a transceiver (19) coupled to the transmission line probe (13), the transceiver (19) comprising:

        a first signal generator (31) connected to the transmission line probe (13) and controllable to generate the transmit signal ($S_T$) to include a measurement sweep across frequencies being within a measurement frequency range defined by a first frequency ($f_1$) and a second frequency ($f_2$), higher than the first frequency ($f_1$);
        a second signal generator (33) configured to generate an offset signal (So) having a constant frequency (fo) lower than the first frequency ($f_1$);
        a first mixer (35) having a first input (41) connected to the first signal generator (31) for receiving the transmit signal ($S_T$), a second input (43) connected to the second signal generator (33) for receiving the offset signal ($S_O$), and an output (45) for providing a first mixer output signal ($S_{REF}$); and
        a second mixer (37) having a first input (47) connected to the output (45) of the first mixer (35) for receiving the first mixer output signal ($S_{REF}$), a second input (49) connected to the transmission line probe (13) for receiving the reflection signal ($S_R$), and an output (51) for providing a second mixer output signal ($S_{IF}$); and

    processing circuitry (21) coupled to the transceiver (19) and configured to determine the filling level (L) based on the second mixer output signal ($S_{IF}$).

2. The radar level gauge system (3) according to claim 1, the measurement sweep being across a time series of piece-wise constant frequencies within the measurement frequency range.

3. The radar level gauge system (3) according to claim 2, a difference ($f_{step}$) between frequencies in each pair of adjacent frequencies in the frequency range being equal to the first frequency ($f_1$).

4. The radar level gauge system (3) according to any of the preceding claims, wherein the radar level gauge system (3) is configured to:

    form a frequency domain measurement signal (67) indicative of an amplitude and a phase of the second mixer output signal ($S_{IF}$) as a function of frequency; and
    transform the frequency domain measurement signal (67) to a time domain measurement signal (73).

5. The radar level gauge system (3) according to claim 4, wherein the radar level gauge system (3) is configured to form the frequency domain measurement signal (67) by determining data sets of the amplitude and phase of the second mixer output signal ($S_{IF}$) for different frequencies and adding mirrored data sets for negative frequencies, each mirrored data set for a negative frequency value being a complex conjugate of a data set of the measured amplitude and phase of the second mixer output signal ($S_{IF}$) for the corresponding positive frequency value.

6. The radar level gauge system (3) according to any one of claims 3 to 5, wherein the radar level gauge system (3) is configured to transform the frequency domain measurement signal (67) to the time domain measurement signal (73) by performing inverse digital fourier transformation on the frequency domain measurement signal (67).

7. The radar level gauge system (3) according to any one of claims 1 to 6, comprising a filter (40, 59) arranged and configured to filter the second mixer output signal ($S_{IF}$), the filter (40, 59) having an upper cutoff frequency being higher than the constant frequency (fo) of the offset signal (So) and lower than two times the constant frequency (fo) of the offset signal (So).

8. The radar level gauge system (3) according to any one of claims 1 to 7, wherein the transmission line probe (13) is a single conductor probe configured to guide the transmit signal ($S_T$) and the reflection signal ($S_R$) as surface waves.

9. The radar level gauge system according to any one of claims 1 to 7, wherein the transmission line probe (13) is one of a coaxial probe and a parallel wire transmission line probe.

10. A method of determining a filling level (L) of a product (7) in a tank (9) using a radar level gauge system (3) comprising a transceiver (19), a transmission line probe (13), and processing circuitry (21), the method comprising:

> generating (S31), by a first signal generator (31) comprised in the transceiver (19) and connected to the transmission line probe (13), an electromagnetic transmit signal ($S_T$) including a measurement sweep across frequencies being within a measurement frequency range defined by a first frequency ($f_1$) and a second frequency ($f_2$), higher than the first frequency ($f_1$);
> guiding (S32) the transmit signal ($S_T$) towards and into the product (7) in the tank (9);
> guiding (S33) an electromagnetic reflection signal ($S_R$) resulting from reflection of the transmit signal ($S_T$) at impedance discontinuities encountered thereby, back towards the transceiver (19);
> generating (S34), by a second signal generator (33) comprised in the transceiver (19), an offset signal (So) having a constant frequency (fo) lower than the first frequency ($f_1$);
> mixing (S35) the transmit signal ($S_T$) with the offset signal (So) to form a first mixer output signal ($S_{REF}$) exhibiting a constant frequency difference in relation to the transmit signal ($S_T$) across the measurement sweep;
> mixing (S36) the reflection signal ($S_R$) with the first mixer output signal ($S_{REF}$) to form a second mixer output signal ($S_{IF}$); and
> determining the filling level (L) based on the second mixer output signal ($S_{IF}$).

11. The method according to claim 10, the second signal generator generating the offset signal (So) continuously during a duration of the measurement sweep.

12. The method according to claim 10 or 11, the measurement sweep being across a time series of piece-wise constant frequencies within the measurement frequency range.

13. The method according to claim 12, a difference ($f_{step}$) between frequencies in each pair of adjacent frequencies in the frequency range being equal to the first frequency ($f_1$).

14. The method according to any one of claims 10 to 13, comprising:

> forming a frequency domain measurement signal (67) indicative of an amplitude and a phase of the second mixer output signal ($S_{IF}$) as a function of a frequency of the transmit signal ($S_T$); and
> transforming the frequency domain measurement signal (67) to a time domain measurement signal (73).

15. The method according to any one of claims 10 to 14, further comprising filtering the second mixer output signal ($S_{IF}$) using a filter (40, 59) having an upper cutoff frequency being higher than the constant frequency (fo) of the offset signal (So) and lower than two times the constant frequency (fo) of the offset signal (So).

*Fig. 1A*

*Fig. 1B*

Fig. 2

| Generate $S_T$ | — S31 |

| Guide $S_T$ | — S32 |

| Guide $S_R$ | — S33 |

| Generate $S_O$ | — S34 |

| Mix $S_T$ and $S_O$ to form $S_{REF}$ | — S35 |

| Mix $S_R$ and $S_{REF}$ to form $S_{IF}$ | — S36 |

| Determine L based on $S_{IF}$ | — S37 |

*Fig. 3*

Fig. 4

Fig. 5A

*Fig. 5B*

Fig. 6

| | Europäisches Patentamt<br>European Patent Office<br>Office européen des brevets | | **EUROPEAN SEARCH REPORT** | **Application Number**<br>EP 24 22 1164 |
|---|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | US 2023/063153 A1 (ERIKSSON MIKAEL [SE])<br>2 March 2023 (2023-03-02)<br>* paragraphs [0001], [0006] - [0012],<br>[0022] - [0052]; figures 1-6 *<br>----- | 1-15 | INV.<br>G01F23/284<br>G01S13/34<br>G01S13/88 |
| A | US 2016/103006 A1 (EDVARDSSON OLOV [SE])<br>14 April 2016 (2016-04-14)<br>* paragraphs [0001], [0013] - [0030],<br>[0040] - [0079]; figures 1-8 *<br>----- | 1-15 | |
| A | US 2017/254692 A1 (FABER HARALD [DE] ET<br>AL) 7 September 2017 (2017-09-07)<br>* paragraphs [0001], [0009] - [0020],<br>[0025] - [0036]; figures 1-3 *<br>----- | 1-15 | |
| | | | **TECHNICAL FIELDS<br>SEARCHED (IPC)**<br><br>G01F<br>G01S |

| The present search report has been drawn up for all claims | | |
|---|---|---|
| Place of search<br>**The Hague** | Date of completion of the search<br>**13 May 2025** | Examiner<br>**Feldhoff, Roger** |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

**EP 4 764 427 A1**

## ANNEX TO THE EUROPEAN SEARCH REPORT
## ON EUROPEAN PATENT APPLICATION NO.

EP 24 22 1164

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | | | Publication date | Patent family member(s) | | Publication date |
|---|---|---|---|---|---|---|
| US 2023063153 | A1 | | 02-03-2023 | CN | 115717924 A | 28-02-2023 |
| | | | | EP | 4141470 A1 | 01-03-2023 |
| | | | | US | 2023063153 A1 | 02-03-2023 |
| US 2016103006 | A1 | | 14-04-2016 | CA | 2964178 A1 | 14-04-2016 |
| | | | | CN | 105737942 A | 06-07-2016 |
| | | | | CN | 204269191 U | 15-04-2015 |
| | | | | EP | 3204735 A1 | 16-08-2017 |
| | | | | KR | 20170061139 A | 02-06-2017 |
| | | | | RU | 2017110619 A | 13-11-2018 |
| | | | | US | 2016103006 A1 | 14-04-2016 |
| | | | | WO | 2016055252 A1 | 14-04-2016 |
| US 2017254692 | A1 | | 07-09-2017 | CN | 107076598 A | 18-08-2017 |
| | | | | DE | 102014112453 A1 | 03-03-2016 |
| | | | | EP | 3186597 A1 | 05-07-2017 |
| | | | | US | 2017254692 A1 | 07-09-2017 |
| | | | | WO | 2016030252 A1 | 03-03-2016 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160103006 A
- US 20230063153 A